# EUROPEAN PATENT APPLICATION

(11) **EP 0 914 776 A2**
(43) Date of publication of application: **12.05.1999**
(21) Application number: 98204132.9
(22) Date of filing: 07.12.1998
(51) Int. Cl.: A23G 1/20, A23G 1/21

(54) **Method and system for moulding of chocolate articles in a moulding chamber**

(71) Applicant: AASTED-MIKROVERK APS, 3520 Farum (DK)
(72) Inventor: Aasted, Lars, 2920 Charlottenlund (DK)
(74) Representative: Heiden, Finn

(57) **Abstract**

The invention relates to a method and a system for the production of shells of fat-containing chocolate-like mass, whereby an amount of liquid mass is deposited into a mould cavity. The mould cavity containing the liquid mass is transported into a moulding chamber (12) where an associated core member is immersed into the mass to determine the shape of the chocolate article. The temperature of the core member is controlled and the time of immersion into the mass is set to a predetermined time after which the core member is lifted clear of the mass. Inside the moulding chamber, air is being moved to render the atmosphere controllable. In a preferred embodiment the chamber is sealed effectively from the surrounding atmosphere, by maintaining an overpressure inside said chamber compared to the surroundings.

## Description

The present invention relates to production of shells of fat-containing, chocolate-like masses in particular for chocolate articles wherein a defined amount of tempered liquid chocolate-like mass is filled into a mould cavity, whereafter an associated core member is immersed into the mass, the temperature of which core member is being controlled.

Chocolate moulding methods of this type are well known within the prior art and are used extensively by the chocolate making industry, due to the great advantages of this technique in terms of production speed and product uniformity.

The first commercially available chocolate moulding method and system of the above mentioned type was described in EP 0 589 820 A1 (Aasted-Mikroverk Aps). By this method and the associated system the chocolate-like mass solidifies in the mould after a cooling member having a temperature lower than 0°C has been lowered into the liquid mass. The cooling member is kept in a fully immersed position for a predetermined period of time. Furthermore, the cooling member is lowered into the mass immediately after the chocolate has been filled into the mould cavity. The associated apparatus furthermore comprises means for controlling the up and down movement of the cooling members as well as residence time in the fully immersed position.

Further prior art is described in EP 0 713 813 A1 (Gebr. Bindler) and EP 0 775 447 A2 (Winkler & Dünnebier). According to EP 0 713 813 A1 the plunger should be cooled to a temperature below the dew point of the surrounding atmosphere to ensure the presence of a thin layer of water on the surface of the plunger in order to facilitate the separation of the plunger from the solid chocolate. According to this teaching the temperature of plunger is determined by the temperature of the surrounding atmosphere and thus not freely adjustable. Using this separating technique, chocolate contamination is left on the surface of the plunger.

The other EP publication discloses a method and a system for the formation of chocolate shells by which a layer of separating agent is applied to the plunger prior to immersion into the liquid mass. The separating agent could be e.g. water or even chocolate and both separating agents are claimed to cause the chocolate to be easily separated from the plunger.

However, it is well known that the presence of water or moisture on the surface of chocolate will cause the formation of sugar bloom, an unattractive grey rough surface which is caused by the condensed water dissolving sugar from the chocolate and then drying out, leaving tiny crystals of sugar on the surface. Furthermore, the presence of moisture on the surface of the product or the tools can lead to the development of contamination by bacteria, yeasts, or fungi. Chocolate-like masses, which contain complex forms of lipids, proteins, and carbohydrates, are excellent nutrient media for supporting microbial growth, the almost complete absence of water in the chocolate being the only factor restricting such growth.

A further important disadvantage of using a separating agent such as ice or solid chocolate is that the agent may act to the contrary of its purpose. If heavy ice-formation takes place on the surface of a core member cooled to temperatures below 0°C, then the release of the shells from the core member will be hampered and the production line will have to be stopped until the shell in question has been released manually from the core and the core member has been de-iced. The same will apply if another solid separation agent, as for instance chocolate is used, or if - as disclosed in EP 0 713 813 A1 - chocolate contamination is left on the surface of the plunger. The use of other types of separating agents has been described in the prior art but these agents may interact with the chocolate to affect its flavour, hardness, and gloss not to mention the possibility that they may have a negative impact on human health. Consequently, the use of any kind of applied separating agent on the plunger is unacceptable to the chocolate industry.

A further publication, DE 197 811 C1 deals with the task of preventing the formation of spots on the surface of the chocolate shells caused by ice-formation or water condensation on the surface of a plunger during moulding of outer shells of liquid fat-containing masses, e.g. dog food or chocolate articles. However, the DE teaching merely presents the formulation of the problem, which is to keep the dew point of the atmosphere surrounding the product below the temperature of the plunger. In one embodiment of the invention, a system is disclosed where the plunger and mould are enclosed in a generally closed housing.

Though having realised that it is necessary to keep the atmosphere surrounding the cold plunger dry, the DE publication does not disclose any method or means for reaching this goal. Since the housing in the described embodiment is not fully closed, air from the surrounding environment can enter the housing freely through the openings and carry with it an amount of humid air thus altering the dew point of the atmosphere surrounding the plunger. The DE publication does not present any solutions to avoid the use of separating agents on the plunger surface.

Realising that water is the chief enemy of chocolate and that the use of separating agents should be prevented, has led to the present invention allowing the separation of the plunger from the shell without the use of any type of separating agent such as water. It is certainly the object of the invention to provide the necessary basic conditions, which have to apply before any controlling of avoiding the formation of ice of water on the tool members may be performed at all. The effect of the present invention is to render the atmosphere around the core member especially homogenous, thereby controllable and subsequently to control the atmosphere surrounding the core member carefully.

In the present invention, liquid tempered chocolate is deposited into a mould cavity. The mould cavity is transported into a generally closed moulding chamber. The moulding chamber contains openings allowing the mould elements to be transported in and out of the chamber.

While inside said moulding chamber, a core member is lowered into the liquid chocolate mass, the temperature of said core member being controlled. After a pre-determined period of time the core member is lifted again to separate the core member from the chocolate shells.

By the method according to the present invention, air is being moved in the moulding chamber.

The invention furthermore concerns a system comprising a moulding chamber and means adapted to move the air in the moulding chamber.

Surprisingly, it was discovered that the movement of air inside the moulding chamber provided an even and reliably stable atmosphere in the chamber. Another unforeseen advantage of the invention is that the atmosphere in the immediate vicinity of the core member and mould cavity is exceptionally stable. In this way, it becomes possible for the operator to control the physical parameters of the atmosphere in the moulding chamber very precisely. In a controlled atmosphere, the core member will readily release the shell, and the use of separating agents can thus be avoided.

A characteristic trait to chocolate moulding of the described type is that there are great temperature gradients in the chamber. The chocolate could be between 27 and 34°C, the mould cavities could be between 15 and 25°C, the plunger is often below 0°C and preferably below -5°C. By controlling the movement and thereby mixing of air inside the moulding chamber, the occurrence of unpredictable air movement or turbulence due to the thermodynamic imbalances in the chamber is greatly reduced.

When the mould plate carrying the core members and mould element are separated the invention ensures that that the air drawn into the space growing between them is not of uncontrolled quality.

In a particularly preferred embodiment of the invention, air movement is caused by an external air supplier, which supplies air to the moulding chamber to maintain an overpressure inside the chamber compared to the surroundings. By this embodiment is obtained that the atmosphere inside the moulding chamber is separated efficiently from the surrounding atmosphere and the open chamber in reality becomes essentially closed. Uncontrolled air from outside cannot enter the moulding chamber during the process, not even when the mould elements enter or leave the moulding chamber. The conditions of the atmosphere in the moulding chamber are then controlled solely by the quality of the air supplied to the moulding chamber via the air supply giving the operator an unprecedented possibility of regulating the climate around the core member and moulding cavity precisely.

An important effect of this embodiment is that air entering the moulding chamber from the external air supply is mixed efficiently with the air in the moulding chamber. This effect is particularly important in the embodiments where air has been pre-conditioned (dehumidified or air-conditioned) and the supplied air thereby is slightly different from the air inside the moulding chamber. A further advantage is that bodies of air having an undesired quality are not left undisturbed in the chamber and that pockets of uncontrolled air carried with the mould elements into the moulding chamber are removed efficiently.

Since the climate inside the moulding chamber can now be regulated independently of the production room conditions, it becomes possible to operate the moulding line irrespective of these conditions, and irrespective of changes in the conditions. An additional advantage of the invention is that it becomes possible to set the temperature of the core member completely independently of the physical characteristics of the outside atmosphere.

In a preferred embodiment of the invention, the air supplied to the chamber is dehumidified. By dehumidified air is meant that the water content of the air is reduced to a pre-determined level. Hereby the interaction of water with the moulding process is completely inhibited and the use of water as a separating agent can thereby be avoided. Since condensation of water or ice on the plunger or other cold parts inside the moulding chamber is avoided, the occurrence of shells sticking to the core members as well as the contamination risk is eliminated.

The invention will be explained more fully below with reference to particularly preferred embodiments as well as the figures listed below:
Fig. 1. Is a schematic view of the steps performed for reaching a packaged shell product,
Fig. 2. Is a schematic view of a turning point of an endless carrier for the mould elements, carried through the steps in Fig. 1.
Fig. 3. Is a cross sectional view along A-A of the mould element in Fig. 2.
Fig. 4. Is a lateral schematic cross-sectional view through a core-member and an underlying mould-cavity in which liquid chocolate-mass has been deposited.
Fig. 5. Is a cross-sectional view of a moulding chamber in which air-movement is caused by an external air-supply device.
Fig. 6. Is a cross-sectional view of a moulding chamber in which air-movement is caused by a device placed inside said chamber.

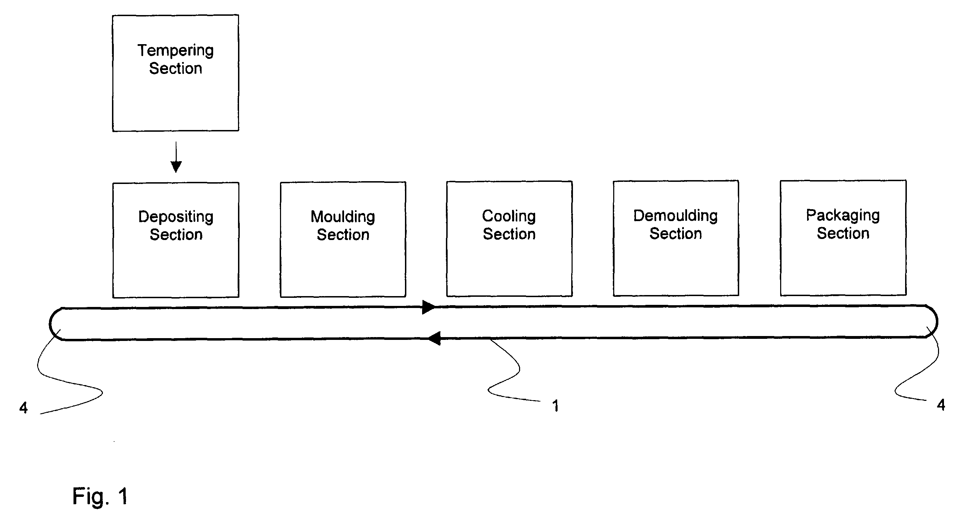

Steps to be performed for reaching a packaged shell product are schematically displayed in Figure 1.

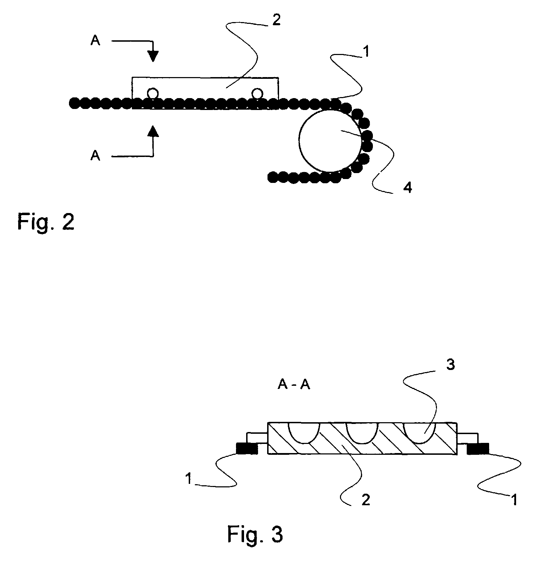

Between two turning points 4 an endless carrier belt 1 normally carries mould elements 2 through the depositing section, the moulding section, the cooling section, the demoulding section, and finally the packaging section. Between the cooling section and the demoulding section a number of other steps may be performed depending on the type of product being produced. These steps may include but are not restricted to centre filling and bottom moulding. After demoulding the endless carrier belt 1 returns the mould elements 2 to the depositing section. The moulding elements may comprise one or several mould cavities 3, as depicted in figure 3.

In the tempering section, the fat-containing, chocolate-like mass is normally tempered to a temperature of around 27-34°C having a content of stable β-crystals. However, the actual temperature as well as content of stable β-crystals depends on the choice of the skilled person for the chocolate-like mass in question. The tempered chocolate-like mass is delivered into the depositing section, in which the liquid mass is deposited into the mould cavity 3. In the moulding section to follow, a core member is immersed into the mass and the shell is actually shaped. Thereafter, a cooling section may follow, as well as optional sections for centre filling, bottom moulding, further cooling sections and finally a section for demoulding the shell from the mould and a packaging section. The method and the system of the present invention are subject of the moulding section.

It should be mentioned, as disclosed in Figures 1, 2 and 3, that the mould elements are moved continuously through the specific sections, such as the moulding section. In the moulding section, the moulding elements may be kept stationary when the associated core members are immersed into the liquid chocolate, or the core members may be moved synchronously with the mould elements within the moulding section. Means for achieving such movements are well known to the skilled person within the art of chocolate making.

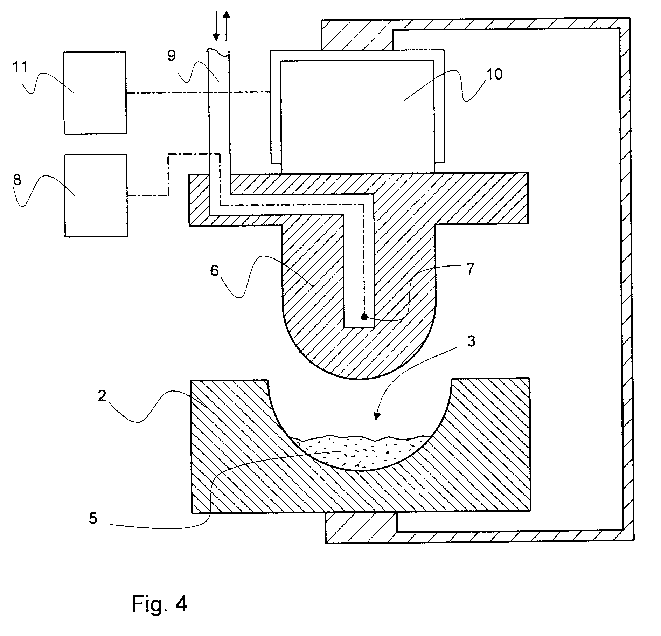

In Figure 4 an embodiment of a moulding tool in which the actual moulding takes place, is disclosed. The mould element 2 with liquid chocolate-like mass 5 in the mould cavity 3 has been transported into the moulding section and positioned by means of positioning tools (not shown). A core member 6 is to be lowered into the liquid mass 5. The temperature of the core member 6 is controlled by means of a temperature probe 7 connected to a temperature control device 8 controlling the temperature of a cooling medium which circulates via channels 9 into the core member 6. However, these temperature regulation devices may be laid out in many different ways as long as an essentially constant temperature of the core member 6 is obtained. The temperature of the core member 6 could be controlled to be equal to or lower than 0°C, but could even be higher than 0°C. An especially good quality of the shells as well as fast and efficient production is achieved when the temperature of the core member 6 is controlled to be lower than around 10°C. Especially excellent results have been obtained when the temperature of the core member 6 is being controlled to be lower than -5°C.

As described in EP 0 589 820 B1 (Aasted-Mikroverk Aps) such systems comprise means for controlling the up and down movement of the core members as well as means for controlling the residence time. Load means 10 to lower the core means into the liquid chocolate as well as means controlling the residence time 11 is shown in Figure 4. By the present invention, the residence times are typically lower than 60 seconds though the invention is not restricted to such limitation. The residence time is more preferably lower than 20 seconds and is found especially expedient when between 0.1 and 5 seconds.

Even the temperature of the mould cavity 3 may be controlled, especially to between 10 and 30°C. Thereby it has been discovered that a smooth outer surface of the shells is obtained without having any shrinks or depressions such as "Saturn rings".

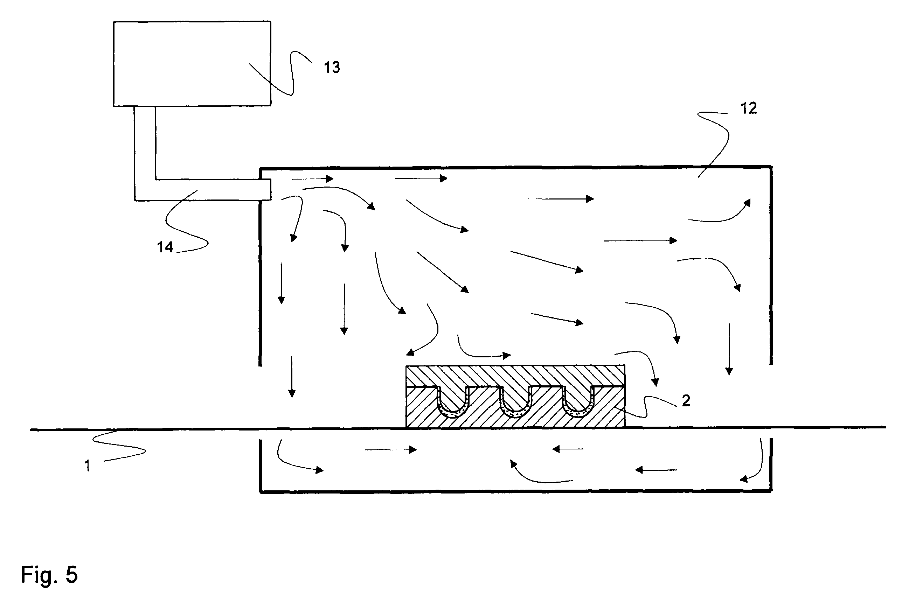

An embodiment of the invention is disclosed in Figure 5, which discloses part of the endless carrier belt 1 transporting mould elements containing liquid tempered chocolate into a moulding chamber 12. Said moulding chamber is generally closed but contains openings to allow the mould elements to be transported into and out from the moulding chamber 12. Inside the moulding chamber, the shells are moulded using a moulding tool as disclosed in Figure 4. After moulding, the mould elements containing the moulded shells are transported out from the moulding chamber for further processing. The moulding chamber 12 of this embodiment is connected to an air supply 13 via a pipe 14. The air supply 13 provides the moulding chamber 12 with air to ensure air-movement preferably in essentially all sections of the chamber and to provide an overpressure inside said chamber compared to the surroundings.

The active mixing of air inside the moulding chamber 12 is very helpful in reducing the occurrence of gradients in temperature or water content of the atmosphere in the camber in general and in the immediate vicinity of the core member and mould cavity in particular. Compared to a moulding chamber where air is not actively mixed the method and system according to the present invention become particularly stable and the regulation of the climate in the chamber can be done with unprecedented precision. A further advantage of the precision is that the chocolate moulding line becomes exceptionally stable whereby unforeseen production speed is obtained.

By the particular embodiment disclosed in Figure 5, is obtained that air inside the chamber 12 is efficiently mixed at the same time as air from outside the moulding chamber does not enter the chamber to disturb the regulation of the atmosphere inside said chamber, especially around the core member and mould cavity. Through this embodiment of the invention, the previously open chamber now becomes essentially closed. The great advantage of the embodiment is that it becomes possible to separate the atmosphere surrounding the moulding tools as described in Figure 4 from the surrounding uncontrollable environments, which may not per se be optimal for chocolate moulding.

The temperature of the core member is determined by a plurality of considerations such as the physical and chemical characteristics of the chocolate-like mass, the size of the chocolate article to be moulded, the required production speed, the temperature of the mould, the cooling capacity of the core member. In order to restrict the number of parameters involved in the determination of the core member temperature, it is preferable that the condition of the surrounding atmosphere is not a factor of importance. An advantage of the present embodiment is that it is possible to set the temperature of the core member and adjust the atmosphere accordingly.

The overpressure in the moulding chamber compared to the surrounding atmosphere should be equal to or higher than zero. The exclusion of external air is found to be especially efficient if the overpressure is at least 10 Pa. The exclusion is found to be exceptionally efficient if the overpressure is at least 100 Pa.

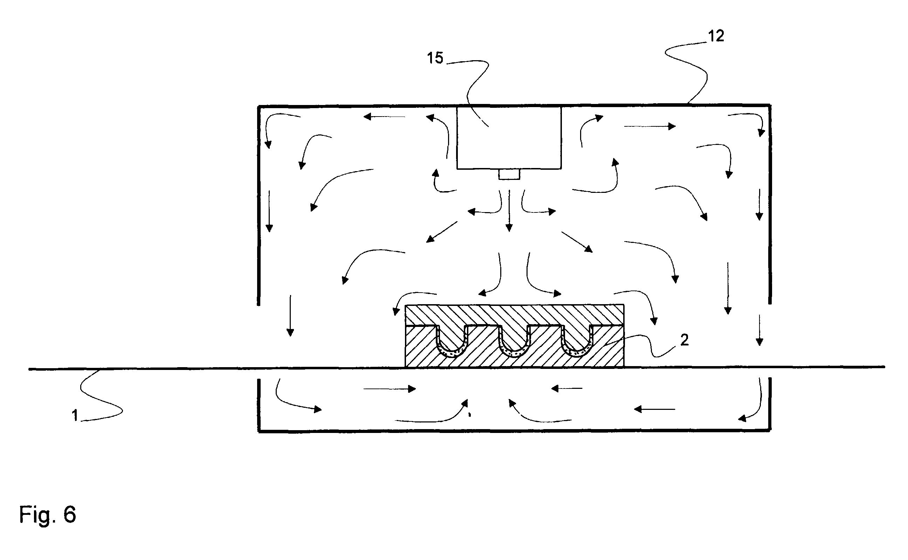

A second embodiment is disclosed in Figure 6. Here, air movement is caused by a device 15 placed inside the moulding chamber. Air-movement may also be caused by several devices 15. It should be mentioned that the embodiment disclosed in Figure 6 may be combined with the embodiment providing overpressure, disclosed in Figure 5. By placing one or more air-moving devices such as fans inside the chamber, air movement can be pointed to the most important places, such as the immediate vicinity of the core member and moulding element, or the part of the cooling system providing cooling medium to the core member. Finally, it may be important to direct air-movement to the corners of the moulding chamber 12, where pockets or bodies of otherwise undisturbed air of uncontrollable quality may accumulate.

In another embodiment of the invention, the airflow from the air supply 13 is regulated using measuring probes. One embodiment of the measuring probe is a pressure probe measuring the pressure inside and outside the moulding chamber. Another embodiment of the probe is airflow probes measuring the airflow in the openings of the moulding chamber 12. The signal from the probes may be used in a controlling device to maintain a flow of air to the chamber 12 ensuring either a pre-set overpressure in the chamber or a pre-set flow of air in the openings.

By this embodiment, a more precise regulation of the overpressure is achieved. A special advantage of this particular embodiment is that it becomes possible to compensate for the changes in pressure associated with the entrance and exit of the mould elements 2 through the openings. The embodiment also makes it possible to maintain the overpressure, even if doors of the moulding chamber (e.g. inspection or maintenance doors) are opened during operation.

In a particularly preferred embodiment of the invention, the air-supply 13 is connected to a dehumidifier to create an overpressure of dehumidified air inside the moulding chamber. By dehumidified air is meant that the water content of the air is reduced to a pre-determined value. It has been found that the performance of the system and method is excellent when the water content of the air supplied to the chamber is below the water content of air having 10% relative humidity at 15°C. This corresponds to a water content of slightly more than 1 g/kg dry air. Particularly excellent and uniform results are achieved when the water content is reduced to 0.8 g/kg dry air or lower. Hereby the interaction of water with the moulding process is completely inhibited and the use of water as a separating agent can thereby be avoided. Since condensation of water or ice on the plunger or other cold parts inside the moulding chamber is avoided, the occurrence of shells sticking to the core elements as well as the contamination risk is eliminated.

In a particular preferred embodiment, the essentially constant temperature of the core member 6 can be read from a display device (e.g. a thermometer). From this value, a person skilled in the art can calculate the maximum water content of an atmosphere having this temperature. The dehumidifier is then set to adjust the water content of the air supplied to the chamber to below the calculated water content. If the operator chooses to set the temperature of the plunger to 0°C then the water content of the air supplied to the moulding chamber should be below 3.5 g/kg dry air which corresponds to approximately 30% relative humidity at 15°C. If the operator chooses to set the temperature to -5°C then the water content of the air should be below 2.5 g/kg dry air, which corresponds to approximately 20% relative humidity at 15°C. In an example that has proved to be particularly useful, the plunger is set to between -5 and -25°C. The moulding chamber is provided with air having a water content of 0.8 g/kg dry air or lower. Air of this water content will only condense on surfaces having a temperature of -25°C or lower and is thus useful for any plunger temperature above -25°C.

The dehumidifier may furthermore be regulated by a device receiving signals from both the temperature probes in the core members and a humidity probe measuring the water content of the atmosphere in the moulding chamber. One advantage of using a feed-back system to regulate the humidity is that the system can be set to operate closer to the saturation level of the atmosphere than the level to be used in the embodiment without the feed-back regulation. Another advantage is that the system becomes independent on fluctuations in the temperature of the core members. Since the air in the moulding chamber is exceptionally homogenous, the measured humidity becomes very precise and the disclosed feed-back regulation extremely efficient.

In another embodiment, the temperature of the supplied air is regulated. The temperature of the supplied air could be between 5 and 25°C. The advantage or regulating the temperature of the supplied air, is that there are great temperature gradients in the chamber. The chocolate could be between 27 and 34°C, the mould cavities could be between 13 and 25°C, the plunger is often below 0°C and preferably below -5°C. By controlling the temperature of the air supplied to the moulding chamber, the occurrence of unpredictable air movement or turbulence due to the thermodynamic imbalances in the chamber is reduced.

## Claims

1. Method for the production of shells of fat-containing, chocolate-like masses, in particular for chocolate articles,
by which an amount of liquid mass (5) is deposited into a mould cavity (3), and the mould cavity (3) containing liquid mass (5) is transported into a moulding chamber (12),
where an associated core member (6) is immersed into the mass,
the temperature of which core member being controlled,
said core member being lifted clear of the mass after a predetermined period of time,
whereby the air in the moulding chamber (12) is being moved.

2. Method according to claim 1, whereby air is supplied to the chamber (12) to maintain an overpressure of at least 10 Pa inside said chamber compared to the surroundings.

3. Method according to claim 1, whereby the pressure in the moulding chamber (12) is equal to or more than 100 Pa higher than the pressure outside said chamber.

4. Method according to claim 1, whereby air movement is caused by an air-moving device (14) inside the moulding chamber.

5. Method according to claim 1, whereby the air supplied to the moulding chamber (12) is dehumidified.

6. Method according to claim 1, whereby the water content of the air supplied to the chamber (12) is below the water content of air having 10% relative humidity at 15°C.

7. Method according to claim 1, whereby the water content of the air supplied to the moulding chamber (12) is kept below the maximum water content of air having the same temperature as the core member (6).

8. Method according to claim 1 by which the air-pressure inside and outside the moulding chamber (12) are measured and the measured pressure difference obtained is used to regulate the air-supply to maintain a pre-set overpressure inside the moulding chamber (12) compared to outside.

9. Method according to claim 1 by which the air-velocity in the openings of the moulding chamber (12) is measured and these measurements are used to regulate the supply of air to the chamber to maintain a pre-set air-velocity in the openings of the moulding chamber.

10. Method according to claim 1, whereby the temperature of the core member (6) is being controlled to be higher than 0°C.

11. Method according to claim 1, whereby the temperature of the core member (6) is being controlled to be equal to or lower than 0°C.

12. Method according to claim 1, whereby the temperature of the core member (6) is being controlled to be between -30°C and -5°C.

13. Method according to claim 1 whereby the temperature of the air supplied to the moulding chamber (12) is regulated.

14. Method according to claim 6, whereby the water content of the atmosphere in the moulding chamber (12) is measured,
and this measurement is used to adjust the water content of the air supplied to said moulding chamber to a pre-set value.

15. A system for the production of shells of fat-containing, chocolate-like masses, in particular for chocolate articles,
comprising at least one mould cavity (3) to receive the mass (5),
at least one associated core member (6) to be immersed into the mass,
as well as means adapted to monitor (7) and control (8) the temperature of said core member,
said system comprising a moulding chamber (12) housing the core member and means (10, 11) to control the up and down movement of the core member,
further comprising means adapted to move the air in the moulding chamber (12).

16. System according to claim 15 comprising means adapted to supply air (13) to the moulding chamber (12),
said air supply means (13) being adapted to provide an overpressure inside the moulding chamber (12) compared to the surroundings of 10 Pa or higher.

17. System according to claim 15, whereby the air-supply means (13) is adapted to provide an overpressure inside the moulding chamber (12) compared to the surroundings of 100 Pa or higher.

18. System according to claim 15 whereby air-movement is caused by a device (15) inside the moulding chamber (12).

19. System according to claim 15 whereby the air supplied to the moulding chamber (12) is dried by use of air dehumidifying means.

20. System according to claim 15, whereby water content of the air supplied is below the water content of air having 10% relative humidity at 15°C.

21. System according claim 16, containing dehumidification means to keep the water content of the air supplied to the chamber (12) is kept below the maximum water content of air having the same temperature as the core member (6).

22. System according to claim 15 comprising means (8) to control the temperature of the core member (6) to higher than 0°C.

23. System according to claim 15 comprising means (8) to control the temperature of the core member (6) to be equal to or lower than 0°C.

24. System according to claim 15 comprising means (8) to control the temperature of the core member (6) to be between -30°C and -5°C.

25. System according to claim 15, comprising means to measure the air-pressure inside and outside the moulding chamber (12),
as well as means to regulate the air supply according to a pre-set overpressure.

26. System according to claim 15, comprising means to measure the air-velocity in the openings of the moulding chamber (12),
as well as means to regulate the air supply according to a pre-set air-velocity.

27. System according to claim 15, comprising means adapted to measure the water content of the atmosphere in the moulding chamber,
furthermore comprising means adapted to regulate the dehumidification means to provide air having a pre-set water content to the chamber according to said measurement.

28. A part of a system for the production of shells of fat-containing, chocolate-like masses, in particular for chocolate articles,
which part comprises a moulding chamber (12),
further comprising means adapted to move the air in the moulding chamber (12).
